# EUROPEAN PATENT SPECIFICATION

(11) **EP 2 015 854 B1**
(45) Date of publication and mention of the grant of the patent: **06.11.2013**
(21) Application number: 07705285.0
(22) Date of filing: 27.02.2007
(51) Int. Cl.: A63F 13/10, A63F 13/12

(54) **DISPLAY APPARATUS AND METHOD**
DISPLAY-VORRICHTUNG UND VERFAHREN
APPAREIL ET PROCEDE D'AFFICHAGE

(30) Priority: 05.05.2006 GB 0608939; 20.12.2006 GB 0625400
(43) Date of publication of application: 21.01.2009
(73) Proprietor: Sony Computer Entertainment Europe Limited, London W1F 7LP (GB)
(72) Inventor: HAMMERTON, Lee, Lincoln LN1 1R2 (GB); KIDD, George, McLaren, London W1F 7LP (GB); CAMPBELL, Diarmid, Achibald, London W1F 7LP (GB); HOLMES, Thomas, London W1F 7LP (GB)
(74) Representative: Turner, James Arthur
(86) International application number: PCT/GB2007/000700
(87) International publication number: WO 2007/128949

(56) References cited:
- WO-A1-2004/028651
- GB-A- 2 398 691
- US-A1- 2002 165 028
- US-A1- 2003 216 177
- US-A1- 2004 266 529
- US-A1- 2005 208 999
- YOON I ET AL: "Web-based remote rendering with IBRAC (image-based rendering acceleration and compression)" PROCEEDINGS 2000 SIGGRAPH/EUROGRAPHICS WORKSHOP ON GRAPHICS HARDWARE. INTERLAKEN, SWITZERLAND, AUG. 21 - 22, 2000, SIGGRAPH / EUROGRAPHICS WORKSHOP ON GRAPHICS HARDWARE, NEW YORK, NY : ACM, US, vol. 19, 21 August 2000 (2000-08-21), pages C321-C330, XP002263805 ISBN: 1-58113-257-3

## Description

The present invention relates to display apparatus and a corresponding method of display. In particular it relates to display apparatus and a corresponding method of display for entertainment devices.

In the field of entertainment, video games provide a wide variety of genres, including adventure, first person action, and racing games. Typically, these games strive to present an immersive experience for the player by use of high-quality graphics and realistic in-game physics. However, this immersion is limited by the TV screen. For example in a racing game, it can be frustrating for a player not to know where other nearby cars that are not currently on screen might be.

One known solution is to provide multiple views of the simulation, which the user can switch between in order to maintain a sense of the game-world surrounding them. In some cases, one or more views are provided simultaneously, for example the in-game portrayal of a rear-view mirror in a driving game. However, switching views can be disorientating, and the provision of multiple views reduces the effective screen area in which to display the main view. Moreover, when the player looks away from the TV screen, all sense of immersion in the game environment can be lost.

Hand-held multiple-screen games devices such as the Game-and-Watch range, or the Nintendo ® DS games console, similarly may not sustain a sense of immersion when the user looks away from the device.

US-A-2002/165028 (Miyamoto) discloses portable games devices whose game progress is collated on the display of a static game device.

US-A-2004/266529 (Chatani) discloses hand-held devices communicating wirelessly.

Yoon, et. al., 'Web based remote rendering with IBRAC', Proc. 2000 Siggraph / Eurographics workshop on graphics hardware, New York, NY:ACM, US, Vol.19, 21st August 2000 ppC321-C330 discloses a central server that renders a 3D scene and transmits it to a client device over a network.

WO-A-2004/028651 (Philips) discloses a game for mobile phones in which the phone predicts which area the user is likely to visit next.

US-A-2005/208999 (Cheng) discloses a game controller with a camera that provides optical flow control to a static game device.

Embodiments of the present invention seek to alleviate or mitigate the above problems.

Various respective aspects and features of the invention are defined in the appended claims. Features from the dependent claims may be combined with features of the independent claims as appropriate and not merely as explicitly set out in the claims.

An aspect of the invention provides an entertainment system comprising a primary entertainment device operable to output a rendered image relating to a first viewpoint of a game world on a primary display, and one or more secondary portable entertainment devices, wherein the primary entertainment device is operable to transmit game based data to the or each secondary entertainment device, the game based data enabling the or each secondary entertainment device in operation to display a rendered image providing a respective further viewpoint of the game world consistent with the secondary entertainment device's position relative to the primary display.

By enabling a further viewpoint to be displayed on a secondary entertainment device, a user of the entertainment system can look away from a primary display associated with the primary entertainment device to see an additional viewpoint displayed by the secondary entertainment device For example, the secondary entertainment device could act as a rear-view mirror for a driving game.

Embodiments of the present invention will now be described by way of example with reference to the accompanying drawings, in which:
Figure 1 is a isometric view of an entertainment system in accordance with an embodiment of the present invention;
Figure 2 is a schematic diagram of an entertainment device in accordance with an embodiment of the present invention;
Figure 3 is a schematic diagram of an entertainment device in accordance with an embodiment of the present invention;
Figure 4 is a schematic diagram of an entertainment system in accordance with an embodiment of the present invention;
Figure 5 is a flow diagram of a method of display in accordance with an embodiment of the present invention;
Figure 6 schematically illustrates an entertainment system with an attached camera;
Figure 7 is a schematic block diagram of a camera and a motion analysis arrangement;
Figure 8 schematically illustrates a partitioned image area;
Figures 9A to 9D schematically illustrate the detection of a tilt motion;
Figure 10 schematically illustrates a sideways tilt;
Figure 11 schematically illustrates a steering wheel action;
Figure 12 schematically illustrates a forward motion;
Figure 13 schematically illustrates an upward motion;
Figure 14 schematically illustrates a downward motion; and
Figures 15a to 15f schematically illustrate the use of detection regions.

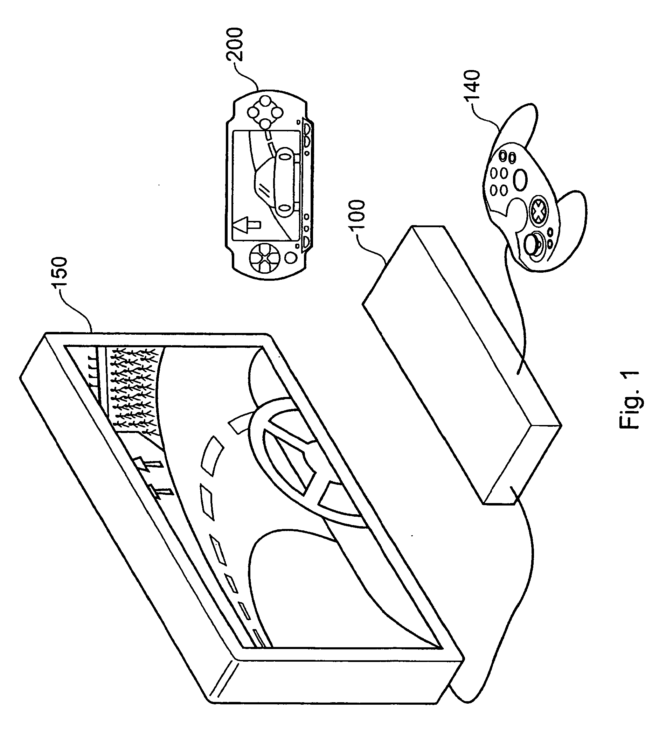

Referring to Figure 1, an embodiment of the present invention enables a user of a primary entertainment device 100, such as a Sony ® PlayStation2 ® or PlayStation3 ® entertainment device (PS2), to look away from a display 150 associated with the primary entertainment device 100 to see an additional viewpoint displayed by a portable secondary entertainment device 200, such as the Sony ® PlayStation Portable ® entertainment device (PSP). In the illustrated example, the PSP acts as a rear-view mirror or wing mirror for a driving game currently being played (using a hand-held controller 140) on the primary entertainment device 100.

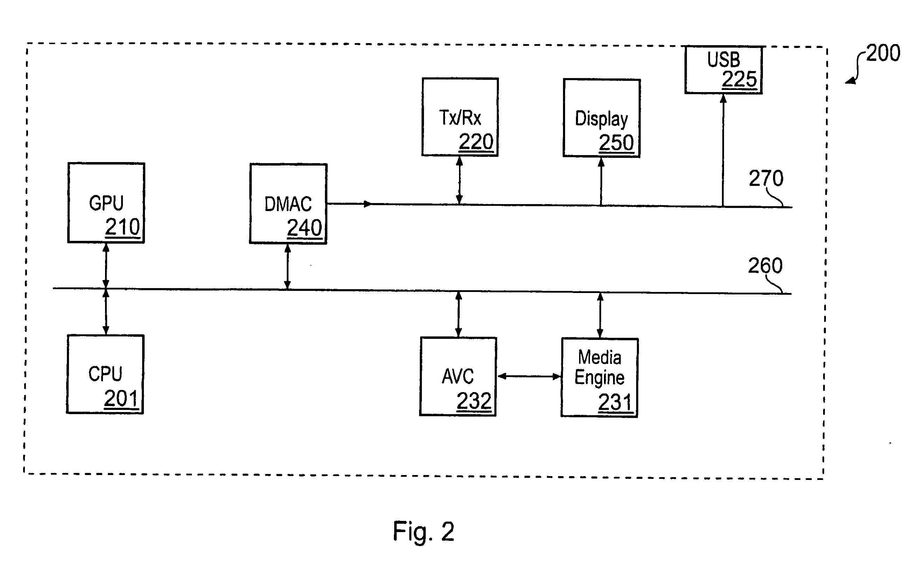

Referring now to Figure 2, a summary schematic diagram of the PSP acting as a secondary entertainment device 200 according to an embodiment of the invention is provided. The PSP comprises a central processing unit (CPU) 201, a graphics processing unit (GPU) 210 for polygon rendering and the like, a media engine 231 and an audio/video processor (AVC) 232 for image rendering, video and audio playback and the like, and a direct memory access controller (DMAC) 240, linked by a common bus 260. The DMAC 240 also links to an external bus 270 through which inputs and outputs are communicated, including output to an integral display 250, to a wireless communication means (Tx/Rx) 220, and to a USB connector 225.

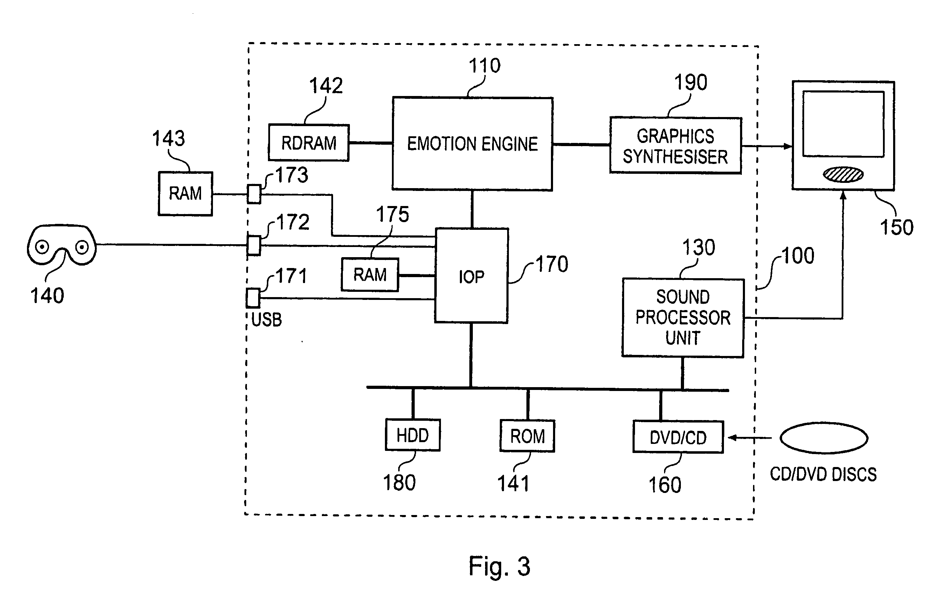

Referring now also to Figure 3, a summary schematic diagram of an embodiment of the primary entertainment device 100 is given. The primary entertainment device 100 can be provided with various peripheral devices connectable to the system unit.

The primary entertainment device 100 comprises: an Emotion Engine 110; a Graphics Synthesiser 190; a sound processor unit 130 having dynamic random access memory (DRAM); a read only memory (ROM) 141; a compact disc (CD) and digital versatile disc (DVD) reader 160; a Rambus Dynamic Random Access Memory (RDRAM) unit 142; an input/output processor (IOP) 170 with dedicated RAM 175. An (optional) external hard disk drive (HDD) 180 may be connected.

The input/output processor 170 has two Universal Serial Bus (USB) ports 171 and an iLink or IEEE 1394 port (iLink is the Sony Corporation implementation of IEEE 1394 standard). The IOP 700 handles all USB, iLink and game controller data traffic. For example when a user is playing a game, the IOP 170 receives data from the game controller and directs it to the Emotion Engine 110 which updates the current state of the game accordingly. The IOP 170 has a Direct Memory Access (DMA) architecture to facilitate rapid data transfer rates. DMA involves transfer of data from main memory to a device without passing it through the CPU. The USB interface is compatible with Open Primary Controller Interface (OHCI) and can handle data transfer rates of between 1.5 Mbps and 12 Mbps. Provision of these interfaces mean that the primary entertainment device 100 is potentially compatible with peripheral devices such as video cassette recorders (VCRs), digital cameras, microphones, set-top bbxes, printers, keyboard, mouse and joystick.

Apart from the USB ports, two other ports 172, 173 are proprietary sockets allowing the connection of a proprietary non-volatile RAM memory card 143 for storing game-related information, a hand-held game controller 140 or a device (not shown) mimicking a hand-held controller, such as a dance mat.

The Emotion Engine 110 is a 128-bit Central Processing Unit (CPU) that has been specifically designed for efficient simulation of 3 dimensional (3D) graphics for games applications. The Emotion Engine components include a data bus, cache memory and registers, all of which are 128-bit. This facilitates fast processing of large volumes of multimedia data. Conventional PCs, by way of comparison, have a basic 64-bit data structure. The floating point calculation performance of the PlayStation2 is 6.2 GFLOPs. The Emotion Engine also comprises MPEG2 decoder circuitry which allows for simultaneous processing of 3D graphics data and DVD data. The Emotion Engine performs geometrical calculations including mathematical transforms and translations and also performs calculations associated with the physics of simulation objects, for example, calculation of friction between two objects. It produces sequences of image rendering commands which are subsequently utilised by the Graphics Synthesiser 190. The image rendering commands are output in the form of display lists. A display list is a sequence of drawing commands that specifies to the Graphics Synthesiser which primitive graphic objects (e.g. points, lines, triangles, sprites) to draw on the screen and at which co-ordinates. Thus a typical display list will comprise commands to draw vertices, commands to shade the faces of polygons, render bitmaps and so on. The Emotion Engine 110 can asynchronously generate multiple display lists.

The Graphics Synthesiser 190 is a video accelerator that performs rendering of the display lists produced by the Emotion Engine 110. The Graphics Synthesiser 190 includes a graphics interface unit (GIF) which handles, tracks and manages the multiple display lists. The rendering function of the Graphics Synthesiser 190 can generate image data that supports several alternative standard output image formats, i.e., NTSC/PAL, High Definition Digital TV and VESA. In general, the rendering capability of graphics systems is defined by the memory bandwidth between a pixel engine and a video memory, each of which is located within the graphics processor. Conventional graphics systems use external Video Random Access Memory (VRAM) connected to the pixel logic via an off-chip bus which tends to restrict available bandwidth. However, the Graphics Synthesiser 190 of the primary entertainment device 100 provides the pixel logic and the video memory on a single high-performance chip, which allows for a comparatively large 38.4 Gigabyte per second memory access bandwidth. The Graphics Synthesiser is theoretically capable of achieving a peak drawing capacity of 75 million polygons per second. Even with a full range of effects such as textures, lighting and transparency, a sustained rate of 20 million polygons per second can be drawn continuously. Accordingly, the Graphics Synthesiser 190 is capable of rendering a film-quality image.

The Sound Processor Unit (SPU) 130 is effectively the soundcard of the system which is capable of recognising 3D digital sound such as Digital Theater Surround (DTS®) sound and AC-3 (also known as Dolby Digital) which is the sound format used for digital versatile disks (DVDs).

A display and sound output device 150, such as a video monitor or television set with an associated loudspeaker arrangement, can be connected to receive video and audio signals from the graphics synthesiser 190 and the sound processing unit 130.

The main memory supporting the Emotion Engine 110 is the RDRAM (Rambus Dynamic Random Access Memory) module 142 produced by Rambus Incorporated. This RDRAM memory subsystem comprises RAM, a RAM controller and a bus connecting the RAM to the Emotion Engine 110.

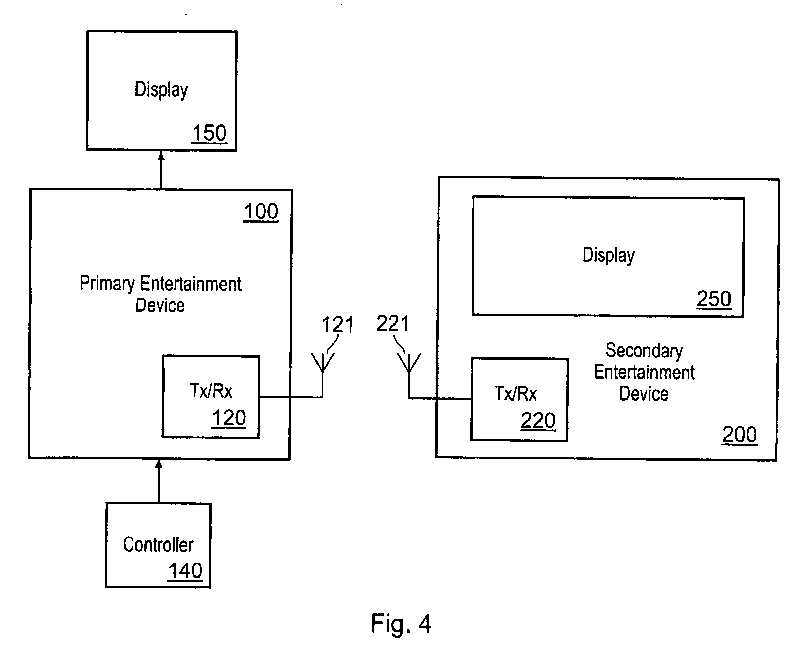

Referring now also to Figure 4, the primary entertainment device 100 in accordance with an embodiment of the present invention further comprises a wireless communications means 120, acting as a further interface to external devices. The wireless communications means 120 may be a WiFi or Bluetooth ® transceiver or the like. As noted previously, the primary entertainment device 100 is operable to display a game on the display and sound output device 150, and to process user inputs from the controller 140.

In accordance with the game as displayed, the primary entertainment device 100 is operable to transmit wirelessly, via the wireless communications means 120 and an antenna 121, game based data to the wireless communications means 220 of the secondary entertainment device 200, enabling an additional viewpoint of the game to be displayed by the integral display screen 250 of the secondary entertainment device 200. (As a routine handshaking measure, the secondary entertainment device's wireless communication means can wirelessly transmit back data such as acknowledgement data, and can also transmit back game control data, derived either from controls such as game buttons on the secondary device, via optical command detection such as that described below, or via a combination of these).

In an embodiment of the present invention, the transmitted game data is a rendered graphic representation of the desired viewpoint for display. In this embodiment, the graphics synthesiser 120 prepares suitable rendered images in addition to those relating to the primary device's (first) viewpoint which are output to the display and sound output device 150. These additional rendered images are routed to the wireless communications means 120, optionally via a compression means (not shown). The images are then transmitted (as the game based data) to the secondary entertainment device 200, which optionally decompresses the images if necessary, and displays them to form the alternative viewpoint shown on the secondary entertainment device.

In another embodiment of the present invention, the secondary entertainment device 200 is operable to run complementary games software enabling it to generate and render its own graphic representation of the desired viewpoint for display. In this embodiment, the game based data transmitted by the primary entertainment device 100 is parametric data describing the game state, from which an appropriate image may be generated and rendered by the secondary entertainment device 200. The parametric data (game parameters) may be selected from the following: in-game object position parameters; in-game object motion parameters; viewpoint position parameters, and/or viewpoint orientation parameters.

Thus in this embodiment, the game based data may variously comprise game resource data, game world data, event data, and object data as required. For example, in a driving game, the primary entertainment device 100 initially provides the secondary entertainment device 200 with game resources such as polygon maps, textures, lighting and transparency data as appropriate. Then game world data (e.g. which race track to use) and preference data (e.g. selected vehicle types) relevant to the current game configuration are provided. Then during play, the primary entertainment device 100 both displays the primary viewpoint on its own display and provides the secondary entertainment device 200 with position and orientation data for the cars and the viewpoint to be displayed on the secondary entertainment device. For example, this information may be formed as a mix of key frame data and deltas (change data from the last key frame).

It will be appreciated that to display an alternative viewpoint faithfully, a comparable frame-rate on the secondary entertainment device is desirable. However, this may result in a high data rate, particularly where more than one secondary entertainment device is part of a wireless network of devices. Therefore optionally, the or each secondary entertainment device comprises software to predict the motion of objects in the game world (for example by extrapolation of historical or prior-received game based data). The use of prediction reduces the required data rate for position and orientation data by allowing the predicted motion to fill-in between transmitted values. At the same time, prediction also improves resilience to disruption or interference in transmission or reception by allowing the secondary device to predict the motion or position of an object if the transmitted data is lost or corrupt.

Depending upon the effective number of image frames over which prediction or extrapolation is to be conducted, different techniques may be employed. To a first approximation, linear extrapolation of object positions may be sufficient to predict relevant game data for a single frame. Alternatively, polynomial extrapolation using a finite difference method may provide a more realistic prediction that is sufficient for use over a number of frames.

To reduce the computational load of prediction, the recording and extrapolation of historical data may be restricted to sample points associated with each rigid body whose position is to be predicted; in the case of a car this may be a single point, whereas in the case of a human character it may comprise points for each part of the body. The positional change obtained by extrapolation of these sample points can be applied to all related vertices in the rigid body.

In either of the two preceding embodiments, enabling software for the secondary entertainment device 200 to either receive or generate the graphic representation of the desired viewpoint for display may also be transmitted by the primary entertainment device 100, or may be accessed from a storage means such as a memory stick or an optical disk such as a universal media disk (UMD).

In the example of a PSP acting as a secondary entertainment device 200, a protocol compatible with the so-called PSP Ad-hoc communication mode may be used to transfer the executable data from the primary entertainment device 100.

It is anticipated that a Sony ® Playstation3 ® will also be a suitable primary entertainment device 100.

It will be apparent to a person skilled in the art that more than one secondary entertainment device 200 may be deployed, each giving the same or a respective different viewpoint, those viewpoints preferably being different to the (first) viewpoint displayed by the primary entertainment device. These views may replicate specific real-life views, such as rear-view and left or right wing mirrors, or an over-the-shoulder viewpoint, or may be spaced to extend the field of view of the player, potentially up to 360°, with respect to the player's primary viewpoint as displayed on the display and sound output device 150. The additional viewpoints can be achieved via the transmission of rendered images from the primary entertainment device, via the transmission of parametric data, or both (though it is preferred that any individual secondary entertainment device uses one or the other technique).

Alternatively or in addition, one or more secondary entertainment devices 200 may provide a viewpoint that tracks additional objects or characters in the game independently of the player's primary viewpoint. In general, in respect of any individual secondary entertainment device, the user can specify (via controls associated with the primary entertainment device, that secondary entertainment device or even another secondary entertainment device) which viewpoint should be shown on that secondary entertainment device. In general this decision (if indicated at a secondary entertainment device) needs to be transmitted wirelessly back to the primary entertainment device so that the primary device can generate the appropriate rendered images and/or parametric data for wireless transmission to that secondary device. However, in the case of a secondary device which generates and renders its own viewpoint image data for display (using parametric data supplied by the primary entertainment device) it is possible to make at least limited changes to the viewpoint so displayed without the need for reference back to the primary entertainment device.

It will also be apparent that various means to select a viewpoint are considered to be within the scope of the present invention; for example, the primary entertainment device 100 may determine the view for the or each secondary entertainment device 200, either automatically or by user selection using controller 140. Alternatively or in addition, if the player wishes to change the role of a secondary entertainment device by, for example, moving it from a wing-mirror position to a rear-view mirror position, in an embodiment of the present invention the secondary entertainment device is operable to accept input from integral control means (not shown) to indicate the new role, and, depending upon the game data, either begins rendering the game world from the new viewpoint, or transmits the newly selected viewpoint to the primary entertainment device in order to receive appropriately rendered images.

Likewise, it will be apparent to a person skilled in the art that the view displayed by the or each secondary entertainment device need not be of a similar type to that given by the primary entertainment device, or to those of each other. For example, a secondary entertainment device could act as a map, giving an overhead view of the positions of objects and characters in the player's vicinity, or it could act as a view adjacent to that given by the primary entertainment device, for example acting as a dashboard when placed below the display and sound output device 150 in a racing game or flight simulation. Other appropriate in-game data suitable for such display will be apparent to a person skilled in the art. These additional views allow for more of the primary viewpoint to occupy the display and sound output device 150, thereby also improving immersion in the game.

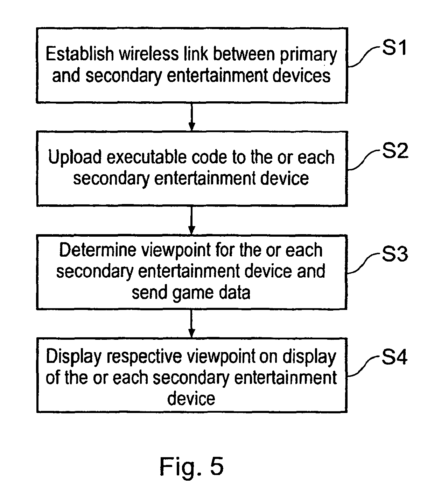

Referring now to Figure 5, a flow chart illustrates a method of displaying a secondary viewpoint on a secondary entertainment device in accordance with an embodiment of the present invention.

In step 1, the primary and secondary entertainment devices establish a wireless link.

In step 2, any executable code required to receive or render game images is uploaded to the or each secondary entertainment device from the primary entertainment device.

In step 3, the viewpoint is determined, and appropriate game data is transmitted.

In step 4, the viewpoint is displayed on the display of the secondary entertainment device in an ongoing fashion.

As noted above, some or all of the executable software may be loaded by memory stick, optical disk, or system read-only memory (ROM). If so, then step 2 may be omitted.

It will be apparent to a person skilled in the art that variations in the above method corresponding to operation of the variations in apparatus disclosed above are considered to be within the scope of the present invention, including:
- that the viewpoint may be determined by either the primary entertainment device or by user assignment (via the primary or secondary entertainment device),
- that the viewpoint may track an ancillary character or object,
- that multiple viewpoints may be arranged to extend the primary field of view,
- that the viewpoint may represent complementary view types, such as a map view or dashboard view, and
- that the or secondary entertainment device may predict object/character position and motion.

It will be appreciated that in embodiments of the present invention, elements of the display method may be implemented in the entertainment devices in any suitable manner. For example, the primary entertainment device may generate the viewpoints in one game where the graphical output is such that it has sufficient computing resource to render the additional view or views, whereas in another game it may be desired to only transmit game parameters and utilise the rendering functionality of the secondary entertainment device. Similarly the primary entertainment device may generate a view point for one secondary entertainment device, but switch to the use of game parameters if additional secondary entertainment devices are joined to the game.

Consequently the present invention may be implemented in any suitable manner to provide suitable apparatus or operation between a plurality of entertainment devices. In particular, it may consist of a primary entertainment device, adapted by software reconfiguration to communicate appropriately with one or more secondary entertainment devices, and one or more secondary entertainment devices, adapted to communicate appropriately with a primary entertainment device and provide a further viewpoint in a game.

Notably, instructions loaded into the primary entertainment device may therefore also comprise instructions to be forwarded to the or each secondary entertainment device.

Thus adapting existing parts of a conventional entertainment device may comprise for example reprogramming of one or more processors therein. As such the required adaptation may be implemented in the form of a computer program product comprising processor-implementable instructions stored on a data carrier such as a floppy disk, optical disk, hard disk, PROM, RAM, flash memory or any combination of these or other storage media, or transmitted via data signals on a network such as an Ethernet, a wireless network, the internet, or any combination of these or other networks.

It will be clear to a person skilled in the art that embodiments of the present invention may variously provide some or all of the following advantages:
- The player can behave naturally by looking at a virtual rear view mirror or wing mirror in a realistic position relative to the primary display, so adding to the sense of realism;
- The field of view available to the player can be expanded in an ad-hoc manner;
- Additional characters and objects can be tracked on a separate display;
- In-game information can be shown on a separate display, simultaneously giving a player the sense of holding in-game equipment reactive to the game, and leaving more room on the primary display to render the game environment.

Some example applications of the above techniques are as follows:
Driving game: the PSP can act as a rear view mirror (and, optionally, as a steering wheel - see below)
Platform game: the PSP can display an overview map of the game environment.
First person shooting game: the PSP can act as a "radar" screen showing incoming opponents
Soccer or other sports game: the PSP can display a map of the entire pitch showing the positions of players on both teams.
Basketball or similar game: the PSP can show health statistics for a team's players, aiding team management.
Fantasy role play game: the PSP can show current "magic" levels, and offer hints as to how to use the magic.
Flight simulator: the PSP can act as a radar screen showing targets and incoming opponents.

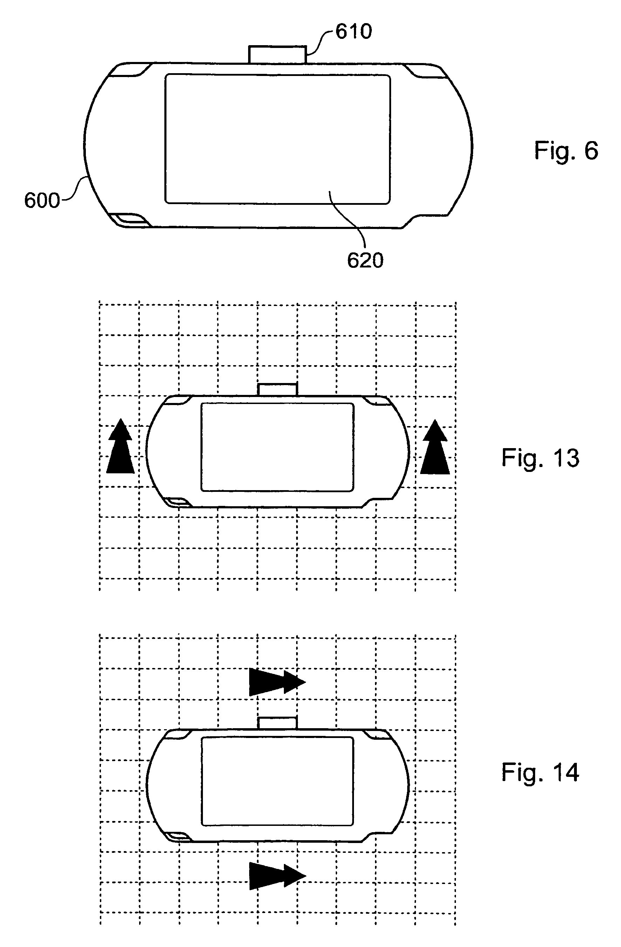

Figure 6 schematically illustrates a PSP 600 with an attached camera 610. The camera 610 is a webcam type of device and connects to the PSP 600 via a USB port on the top of the PSP. The camera receives power from the PSP and returns a succession of images, forming a video signal, to the PSP. For the present usage, the camera is arranged to point in the opposite direction to the screen, so that if a user is holding the PSP in front of him and looking at the screen 620, the camera is pointing away from the user.

This arrangement allows the use of so-called "optical flow" to be used to control the progress or action in a game environment. Optical flow is a generic term which refers to the use of a hand-held device comprising a camera to control a computer system by detecting image motion which implies movement of the hand-held device.

In the present arrangement, the camera 610 attached to the PSP 600 generates a video signal comprising images of the device's surroundings. For example, if the entertainment device is moved, perhaps being tilted upwards, a downward image motion may be detected in the video signal. This is interpreted by the entertainment device as a tilt upwards and an upwards motion is applied to a game character or vehicle under control, or an upward move is made through a menu or scrolling game option structure.

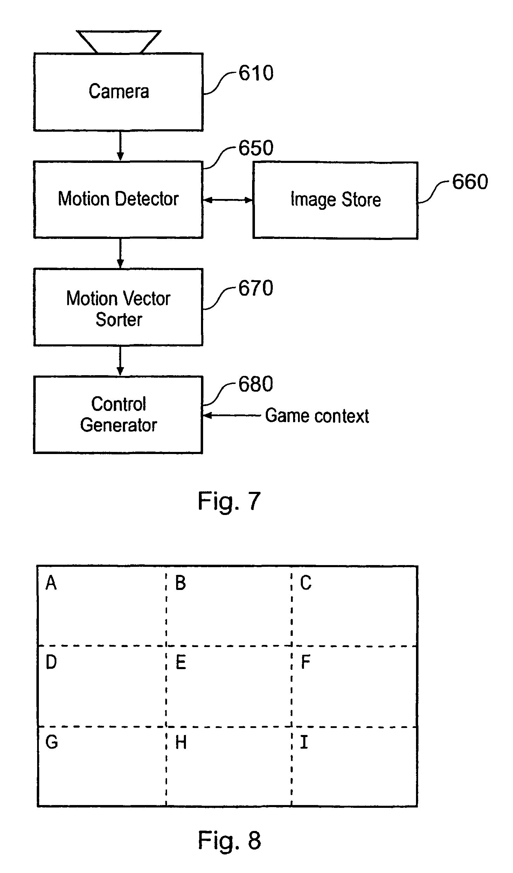

More specifically, motion vectors may be detected in respect of various regions of the video images. The way in which this can be achieved will be described with respect to Figures 7 and 8.

Figure 7 is a schematic block diagram of the camera 610 and a motion analysis arrangement. The motion analysis arrangement comprises a motion detector 650, an image store 660, a motion vector sorter 670 and a control generator 680. The image store may be implemented as part of the memory of the PSP, and the modules 650, 670 and 680 may be implemented by the PSP's CPU 201 acting under appropriate program control as described above. The controls generated by the control generator 680 may be implemented (e.g. as game commands) by the PSP, passed (e.g. wirelessly) to the PS2 as control inputs, or both. In either case, the PSP or PS2 would vary its operation in dependence on the control information.

It will be appreciated that images from the camera could be transmitted directly to the PSP so that the functionality of one or more of the units 650, 660, 670 and 680 could take place at the PS2. However, this is not preferred as it would lead to a vastly increased data transmission requirement from the PSP to the PS2. It is preferred to carry out this processing locally (at the PSP) so that (relatively small) game commands rather than (relatively large) images are transmitted to the PS2.

As the camera 610 captures each successive image, that image is compared with one or more previous images (e.g. the immediately preceding captured image) to detect inter-image motion. The previous images are stored in the image store 660, and, indeed, the current captured image is also stored in the image store during its processing, causing the oldest-stored image in the image store to be discarded.

The motion detector 650 generates one or more motion vectors each indicative of inter-image motion at respective regions or pixel positions. The analysis is carried out using known motion analysis techniques, and preferably generates one motion vector for each block of n x n pixels, where n is perhaps 8.

Depending on the block size referred to above, a motion vector sorter may be employed to establish which are the dominant motion vectors in respective image regions. Examples of the image regions over which this analysis is carried out are shown in Figure 8.

Once the dominant motion vectors have been detected for each region, this information (e.g. the direction, magnitude and statistical dominance of each such motion vector) is passed to the control generator 680 which generates a single machine command in dependence on the distribution of motion vectors amongst the regions. In general, this is carried out by matching the motion directions to predetermined patterns listed below, though in the case of a conflict of patterns, the least dominant (statistically significant) motion vector can be discarded and the remaining regions matched to the patterns shown below, and so on. The block motion vector information, or the output of the control generator, or both, can be subjected to a low pass filtering operation (not shown) to prevent abrupt changes in the machine commands generated by the control generator 680.

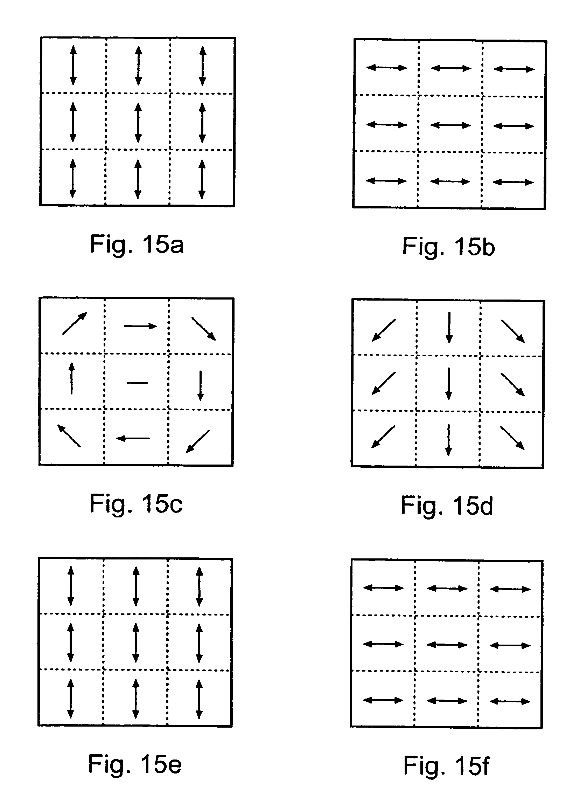

A further input to the control generator 680 is shown, namely the game context. This is because the relatively simple image processing arrangement described here may not be able to distinguish between some subtly different motion types. If it is important to be able to distinguish these motion types, or at least to allocate a game meaning to them, the game context can be used to assist with this. This feature will be described more with reference to Figures 15a to 15f below.

Figure 8 schematically illustrates a partitioned image area. Here, by way of example, the image area is divided into nine regions, A...I. The dominant motion vector in each of these regions is established by known statistical techniques.

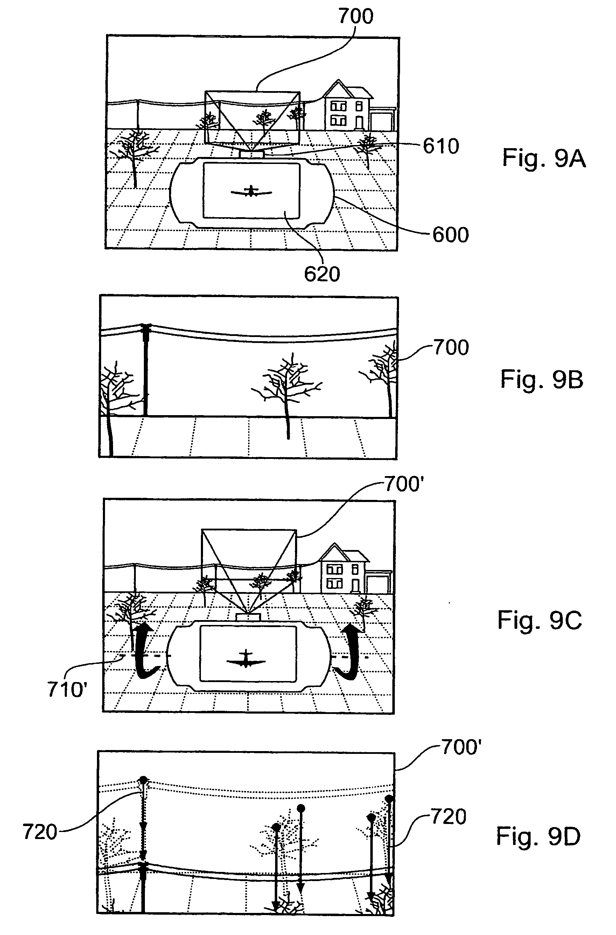

Figures 9A to 9D schematically illustrate the detection of an upward tilt of the PSP 600. In particular, Figure 9A schematically illustrates the PSP 600 along with the field of view 700 of the camera 610. Figure 9B schematically illustrates an enlarged version of the field of view 700. The aeroplane on the screen 620 of the PSP signifies that a game is being played on the PSP or information supplied from the PS2 is being rendered on the PSP as described above.

In Figure 9C the PSP is tilted around a horizontal axis, the captured image corresponding to the field of view 700' of the camera 610 exhibits a substantially vertical motion (assuming the view is a distant one). This change in view is shown schematically in Figure 9D, where arrows 720 indicating the vertical motion of the field of view are shown to represent inter-image motion vectors.

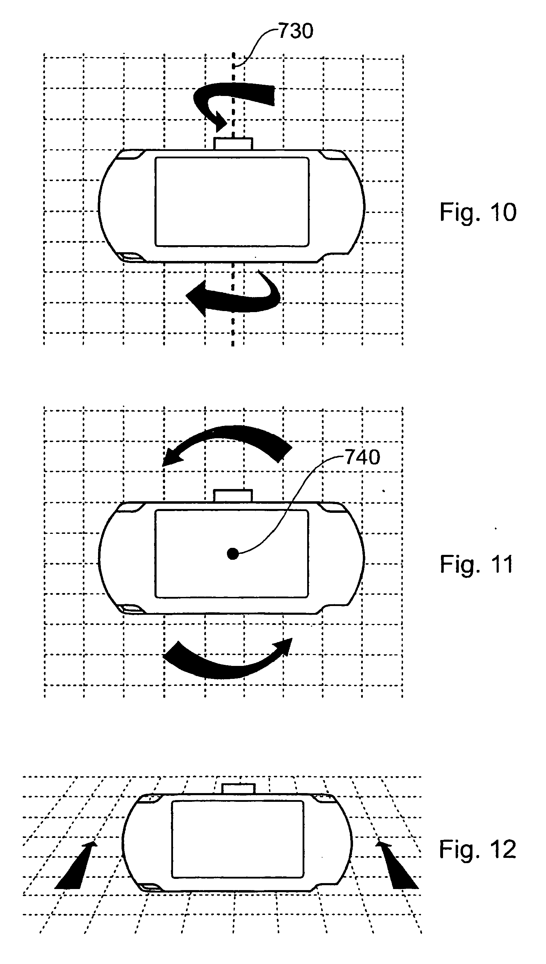

Figure 10 schematically illustrates a sideways tilt, i.e. a tilt around a vertical axis 730. Figure 11 schematically illustrates a steering wheel action, whereby the PSP is rotated substantially around a central axis 740. Figure 12 schematically illustrates a forward motion in which the motion vector direction alters with displacement from the centre of the field of view. Figure 13 schematically illustrates an upward motion. Finally, Figure 14 schematically illustrates a downward motion.

Referring now to Figures 15a to 15f, the dominant motion vectors expected in the nine detection regions shown in Figure 8 are shown for various motion types discussed above. A line ("-") with no arrow head signifies zero or near zero expected motion in that region. The motion types are:

| | |
|---|---|
| up/down motion | Figure 15a (all regions expected to exhibit the same polarity, i.e. all up or all down) |
| left / right motion | Figure 15b (same note on polarity) |
| steering wheel motion - clockwise | Figure 15c (anti-clockwise is represented by the respective opposite polarity in each region) |
| forwards translation | Figure 15d (backwards is reverse) |
| tilt around horizontal axis | Figure 15e (note as above on polarity) |
| tilt around vertical axis | Figure 15f (note as above on polarity) |

It can be seen that in this relatively simple image processing arrangement, it is difficult to distinguish between a tilt motion and a translation motion. If the optical flow input is being used to control a simple action such as a menu input or navigation through a maze, this probably does not matter very much. But it may be that the current game context means that motion of (say) the type shown in Figures 15a and 15f should be interpreted as tilt motion, for example, rather than as translational motion. If that is the case then the game process supplies an input to the control generator 680 indicating that - at this point in the game - motion of this type represents tilt motion rather than translational motion.

In another arrangement, the motion vector sorter 670 could detect a number (e.g. 4 to 8) of most significant motion vectors across the whole image and pass these, with their respective image positions, to the control generator 680. The control generator would then apply these values to, for example, a known least-squares data fitting algorithm to detect which pattern of motion (of those described above) best fits the detected distribution of motion vectors.

The optical flow detection arrangement described here may be used in stand-alone PSP (or other portable device) applications, to control, for example, a game or a menu selection system. Or it could be used in conjunction with the techniques described earlier, so that (in the example) the PSP with optical flow control provides control inputs to the primary games machine.

The optical flow control arrangement may be used in conjunction with conventional controls such as buttons and joysticks.

## Claims

1. An entertainment system comprising a primary entertainment device (100) operable to output a rendered image relating to a first viewpoint of a game world on a primary display (150), and one or more secondary portable entertainment devices (200), wherein the primary entertainment device is operable to transmit game based data to the or each secondary entertainment device, the game based data enabling the or each secondary entertainment device in operation to display a rendered image providing a respective further viewpoint of the game world consistent with the secondary entertainment device's position relative to the primary display.

2. An entertainment system according to any one of the preceding claims in which the primary entertainment device comprises a processor (110) operable to compute in-game parameters, and in which the primary entertainment device is operable to transmit the in-game parameters to one or more secondary entertainment devices, the in-game parameters enabling the one or more secondary entertainment devices in operation to display rendered images of further respective viewpoints of the game.

3. An entertainment system according to claim 1 or claim 2 in which the primary entertainment device comprises graphics logic (190) operable to render images relating to both a primary viewpoint and one or more secondary viewpoints, and in which the primary entertainment device is arranged in operation to transmit the one or more rendered images relating to secondary viewpoints to one or more secondary entertainment devices.

4. An entertainment system according to any one of the preceding claims, in which the secondary entertainment device comprises:
a camera (610);
a motion detector (650) to detect inter-image motion between images captured by the camera; and
a control generator (680) to generate a game control command in dependence on the detected image motion.

5. An entertainment system according to claim 4, the secondary entertainment device comprising a transmitter (220) to transmit the game command to the primary entertainment device, the primary entertainment device varying its operation in response to the game command.

6. A primary entertainment device (100) operable to output a rendered image relating to a primary viewpoint of a game world to a primary display (150), and comprising an interface (120) operable to transmit game based data to one or more secondary portable entertainment devices (200), the game based data enabling the or each secondary entertainment device in operation to display a rendered image providing respective further viewpoint of the game world consistent with the secondary entertainment device's position relative to the primary display.

7. A primary entertainment device according to claim 6 comprising graphics logic (190) operable to render images relating to both a primary viewpoint and one or more secondary viewpoints, and in which the primary entertainment device is further operable to transmit the one or more rendered images relating to secondary viewpoints to one or more secondary entertainment devices.

8. A primary entertainment device according to claim 6 comprising a processor (110) operable to compute in-game parameters, and in which the primary entertainment device is further operable to transmit the in-game parameters to one or more secondary entertainment devices, the in-game parameters enabling the one or more secondary entertainment devices in operation to display rendered images relating to further respective viewpoints of the game.

9. A portable secondary entertainment device (200) comprising an integral display (250) and comprising an interface (220) operable to receive game-based data from a primary entertainment device (100),
the secondary entertainment device being further operable to show on the integral display, based upon the received game-based data, a rendered image providing an alternative viewpoint of a game world to that represented by a rendered image output by the primary entertainment device, the alternative viewpoint being consistent with the secondary entertainment device's position relative to a display (150) showing a rendered image relating to the output of the primary entertainment device.

10. A secondary entertainment device according to claim 9 in which the game based data comprises one or more selected from the list consisting of:
i. in-game object position parameters;
ii. in-game object motion parameters;
iii. viewpoint position parameters;
iv. viewpoint orientation parameters.

11. A secondary entertainment device according to any one of claims 9 or 10 in which the secondary entertainment device is operable to predict the position of in-game objects from prior-received game based data.

12. A secondary entertainment device according to claim 9 in which the game based data comprises images rendered by a primary entertainment device.

13. A secondary entertainment device according to any one of claims 9 to 12 comprising input logic (201, 270) operable to specify a viewpoint selection.

14. A secondary entertainment device according to any one of claims 9 to 13, comprising:
a camera;
a motion detector to detect inter-image motion between images captured by the camera; and
a control generator to generate a game control command in dependence on the detected image motion.

15. A method of display comprising the steps of:
establishing (s1) a communication link between a primary entertainment device and one or more secondary portable entertainment devices, the primary entertainment device being operable to output a rendered image relating to a first viewpoint of a game world on a primary display;
determining (s3) a viewpoint for the or each secondary entertainment device additional to that viewpoint output by the primary entertainment device, the viewpoint being a virtual mirror reflection of the game world consistent with the secondary entertainment device's position relative to the primary display;
transmitting (s3) game-based data enabling the display of a rendered image relating to the viewpoint for the or each secondary entertainment device, and
displaying (s4) the or each rendered image on the display of the or each respective secondary entertainment device.

16. A computer program that, when executed by a computer, causes the computer to operate as a primary entertainment device according to any one of claims 6 to 8.

17. A computer program that, when executed by a portable entertainment device, causes the portable entertainment device to operate as a secondary entertainment device according to any one of claims 9 to 14.

## Patentansprüche

1. Unterhaltungssystem, das ein primäres Unterhaltungsgerät (100), das betriebsfähig ist, ein gerendertes Bild, das eine erste Perspektive einer Spielwelt betrifft, auf einer primären Anzeige (150) auszugeben, und eine oder mehrere sekundäre portable Unterhaltungsgeräte (200) aufweist, wobei das primäre Unterhaltungsgerät betriebsfähig ist, spielbasierte Daten an das oder jedes sekundäre Unterhaltungsgerät zu übertragen, wobei die spielbasierten Daten es dem oder jedem sekundären Unterhaltungsgerät ermöglichen, im Betrieb ein gerendertes Bild anzuzeigen, das eine jeweilige weitere Perspektive der Spielwelt bereitstellt, die mit der Position des sekundären Unterhaltungsgeräts relativ zur primären Anzeige übereinstimmt.

2. Unterhaltungssystem nach einem der vorhergehenden Ansprüche, wobei das primäre Unterhaltungsgerät einen Prozessor (110) aufweist, der betriebsfähig ist, spielinterne Parameter zu berechnen, und wobei das primäre Unterhaltungsgerät betriebsfähig ist, die spielinternen Parameter an ein oder mehrere sekundäre Unterhaltungsgeräte zu übertragen, wobei die spielinternen Parameter es dem einen oder den mehreren sekundären Unterhaltungsgeräten ermöglichen, im Betrieb gerenderte Bilder weiterer jeweiliger Perspektiven des Spiels anzuzeigen.

3. Unterhaltungssystem nach Anspruch 1 oder 2, wobei das primäre Unterhaltungsgerät eine Graphiklogik (190) aufweist, die betriebsfähig ist, Bilder zu rendern, die sowohl eine primäre Perspektive als auch eine oder mehrere sekundäre Perspektiven betreffen, und wobei das primäre Unterhaltungsgerät eingerichtet ist, im Betrieb das eine oder die mehreren gerenderten Bilder, die sekundäre Perspektiven betreffen, an ein oder mehrere sekundäre Unterhaltungsgeräte zu übertragen.

4. Unterhaltungssystem nach einem der vorhergehenden Ansprüche, wobei das sekundäre Unterhaltungsgerät aufweist:
eine Kamera (610);
einen Bewegungsdetektor (650), um eine Zwischenbildbewegung zwischen Bildern zu detektieren, die durch die Kamera aufgenommen werden; und
einen Steuergenerator (680), um in Abhängigkeit von der detektierten Bildbewegung einen Spielsteuerbefehl zu erzeugen.

5. Unterhaltungssystem nach Anspruch 4, wobei das sekundäre Unterhaltungsgerät einen Sender (220) aufweist, um den Spielbefehl zum primären Unterhaltungsgerät zu übertragen, wobei das primäre Unterhaltungsgerät seinen Betrieb als Reaktion auf den Spielbefehl ändert.

6. Primäres Unterhaltungsgerät (100), das betriebsfähig ist, ein gerendertes Bild, das eine primäre Perspektive einer Spielwelt betrifft, an eine primäre Anzeige (150) auszugeben, und eine Schnittstelle (120) aufweist, die betriebsfähig ist, spielbasierte Daten an ein oder mehrere sekundäre portable Unterhaltungsgeräte (200) zu übertragen, wobei die spielbasierten Daten es dem oder jedem sekundären Unterhaltungsgerät im Betrieb ermöglichen, ein gerendertes Bild anzuzeigen, das eine jeweilige weitere Perspektive der Spielwelt bereitstellt, die mit der Position des sekundären Unterhaltungsgeräts relativ zur primären Anzeige übereinstimmt.

7. Primäres Unterhaltungsgerät nach Anspruch 6, das eine Graphiklogik (190) aufweist, die betriebsfähig ist, Bilder zu rendern, die sowohl eine primäre Perspektive als auch eine oder mehrere sekundäre Perspektiven betreffen, und wobei das primäre Unterhaltungsgerät ferner betriebsfähig ist, das eine oder die mehreren gerenderten Bilder, die sekundäre Perspektiven betreffen, an ein oder mehrere sekundäre Unterhaltungsgeräte zu übertragen.

8. Primäres Unterhaltungsgerät nach Anspruch 6, das einen Prozessor (110) aufweist, der betriebsfähig ist, spielinterne Parameter zu berechnen, und wobei das primäre Unterhaltungsgerät ferner betriebsfähig ist, die spielinternen Parameter an ein oder mehrere sekundäre Unterhaltungsgeräte zu übertragen, wobei die spielinternen Parameter es dem einen oder den mehreren sekundären Unterhaltungsgeräten ermöglichen, im Betrieb gerenderte Bilder anzuzeigen, die weitere jeweilige Perspektiven des Spiels betreffen.

9. Portables sekundäres Unterhaltungsgerät (200), das eine integrale Anzeige (250) aufweist und eine Schnittstelle (220) aufweist, die betriebsfähig ist, spielbasierte Daten von einem primären Unterhaltungsgerät (100) zu empfangen,
wobei das sekundäre Unterhaltungsgerät ferner betriebsfähig ist, auf der integralen Anzeige beruhend auf den empfangenen spielbasierten Daten ein gerendertes Bild zu zeigen, das eine, zu der durch ein gerendertes Bild repräsentierten, die durch das primäre Unterhaltungsgerät ausgegeben wird, alternative Perspektive einer Spielwelt liefert, wobei die alternative Perspektive mit der Position des sekundären Unterhaltungsgeräts relativ zu einer Anzeige (150) übereinstimmt, die ein gerendertes Bild zeigt, das die Ausgabe des primären Unterhaltungsgeräts betrifft.

10. Sekundäres Unterhaltungsgerät nach Anspruch 9, wobei die spielbasierten Daten einen oder mehrere Parameter aufweisen, die aus der Liste ausgewählt sind, die besteht aus:
i. spielinternen Objektpositionsparametern;
ii. spielinternen Objektbewegungsparametern;
iii. Perspektivenpositionsparametern;
iv. Perspektivenorientierungsparametern.

11. Sekundäres Unterhaltungsgerät nach einem der Ansprüche 9 oder 10, wobei das sekundäre Unterhaltungsgerät betriebsfähig ist, die Position von spielinternen Objekten aus vorher empfangenen spielbasierten Daten vorherzusagen.

12. Sekundäres Unterhaltungsgerät nach Anspruch 9, wobei die spielbasierten Daten Bilder aufweisen, die durch ein primäres Unterhaltungsgerät gerendert werden.

13. Sekundäres Unterhaltungsgerät nach einem der Ansprüche 9 bis 12, das eine Eingabelogik (201, 270) aufweist, die betriebsfähig ist, eine Perspektivauswahl zu spezifizieren.

14. Sekundäres Unterhaltungsgerät nach einem der Ansprüche 9 bis 13, das aufweist:
eine Kamera;
einen Bewegungsdetektor, um eine Zwischenbildbewegung zwischen Bildern zu detektieren, die durch die Kamera aufgenommen werden; und
einen Steuergenerator, um einen Spielsteuerbefehl in Abhängigkeit von der detektierten Bildbewegung zu erzeugen.

15. Anzeigeverfahren, das die folgenden Schritte aufweist:
Herstellen (s1) einer Kommunikationsverbindung zwischen einem primären Unterhaltungsgerät und einem oder mehreren sekundären portablen Unterhaltungsgeräten, wobei das primäre Unterhaltungsgerät betriebsfähig ist, ein gerendertes Bild auszugeben, das eine erste Perspektive einer Spielwelt auf einer primären Anzeige betrifft;
Bestimmen (s3) einer Perspektive für das oder jedes sekundäre Unterhaltungsgerät zusätzlich zu der Perspektive, die durch das primäre Unterhaltungsgerät ausgegeben wird, wobei die Perspektive eine virtuelle Spiegelreflexion der Spielwelt ist, die mit der Position des sekundären Unterhaltungsgeräts relativ zur primären Anzeige übereinstimmt;
Übertragen (s3) von spielbasierten Daten, die die Anzeige eines gerenderten Bilds ermöglichen, das die Perspektive für das oder jedes sekundäre Unterhaltungsgerät betrifft, und
Anzeigen (s4) des oder jedes gerenderten Bilds auf der Anzeige des oder jedes jeweiligen sekundären Unterhaltungsgeräts.

16. Computerprogramm, das, wenn es durch einen Computer ausgeführt wird, den Computer veranlasst, als ein primäres Unterhaltungsgerät nach einem der Ansprüche 6 bis 8 zu arbeiten.

17. Computerprogramm, das, wenn es durch ein portables Unterhaltungsgerät ausgeführt wird, das portable Unterhaltungsgerät veranlasst, als ein sekundäres Unterhaltungsgerät nach einem der Ansprüche 9 bis 14 zu arbeiten.

## Revendications

1. Système de divertissement comprenant un dispositif principal de divertissement (100) pouvant fonctionner pour délivrer en sortie une image rendue relative à un premier point de vue d'un univers de jeu sur un écran principal (150), et un ou plusieurs dispositifs secondaires de divertissement portables (200), où le dispositif principal de divertissement peut fonctionner pour transmettre des données basées sur le jeu au ou à chacun des dispositifs secondaires de divertissement, les données basées sur le jeu permettant au ou à chacun des dispositifs secondaires de divertissement en fonctionnement d'afficher une image rendue procurant un autre point de vue respectif de l'univers de jeu cohérent avec la position du dispositif secondaire de divertissement par rapport à l'écran principal.

2. Système de divertissement selon l'une quelconque des revendications précédentes, dans lequel le dispositif principal de divertissement comprend un processeur (110) pouvant fonctionner pour calculer des paramètres de jeu, et dans lequel le dispositif principal de divertissement peut fonctionner pour transmettre les paramètres de jeu à un ou plusieurs dispositifs secondaires de divertissement, les paramètres de jeu permettant à l'un ou plusieurs dispositifs secondaires de divertissement en fonctionnement d'afficher des images rendues d'autres points de vue respectifs du jeu.

3. Système de divertissement selon la revendication 1 ou la revendication 2, dans lequel le dispositif principal de divertissement comprend une logique graphique (190) pouvant fonctionner pour rendre des images concernant à la fois un point de vue principal et un ou plusieurs points de vue secondaires, et dans lequel le dispositif principal de divertissement est conçu, en fonctionnement, pour transmettre l'une ou plusieurs images rendues relatives à des points de vue secondaires à un ou plusieurs dispositifs secondaires de divertissement.

4. Système de divertissement selon l'une quelconque des revendications précédentes, dans lequel le dispositif secondaire de divertissement comprend :
une caméra (610) ;
un détecteur de mouvement (650) pour détecter un mouvement inter-image entre des images capturées par la caméra ; et
un générateur de contrôle (680) pour générer une commande de contrôle de jeu dépendant du mouvement d'image détecté.

5. Système de divertissement selon la revendication 4, le dispositif secondaire de divertissement comprenant un émetteur (220) pour transmettre la commande de jeu au dispositif principal de divertissement, le dispositif principal de divertissement changeant son fonctionnement en réponse à la commande de jeu.

6. Dispositif principal de divertissement (100) pouvant fonctionner pour délivrer en sortie une image rendue relative à un point de vue principal d'un univers de jeu sur un écran principal (150), et comprenant une interface (120) pouvant fonctionner pour transmettre des données basées sur le jeu à un ou plusieurs dispositifs secondaires de divertissement portables (200), les données basées sur le jeu permettant au ou à chacun des dispositifs secondaires de divertissement en fonctionnement d'afficher une image rendue procurant un autre point de vue respectif de l'univers de jeu cohérent avec la position du dispositif secondaire de divertissement par rapport à l'écran principal.

7. Dispositif principal de divertissement selon la revendication 6 comprenant une logique graphique (190) pouvant fonctionner pour rendre des images concernant à la fois un point de vue principal et un ou plusieurs points de vue secondaires, et dans lequel le dispositif principal de divertissement peut en outre fonctionner pour transmettre l'une ou plusieurs images rendues relatives à des points de vue secondaires à un ou plusieurs dispositifs secondaires de divertissement.

8. Dispositif principal de divertissement selon la revendication 6 comprenant un processeur (110) pouvant fonctionner pour calculer des paramètres de jeu, et dans lequel le dispositif principal de divertissement peut en outre fonctionner pour transmettre les paramètres de jeu à un ou plusieurs dispositifs secondaires de divertissement, les paramètres de jeu permettant à l'un ou plusieurs dispositifs secondaires de divertissement en fonctionnement d'afficher des images rendues relatives à d'autres points de vue respectifs du jeu.

9. Dispositif secondaire de divertissement portable (200) comprenant un écran intégral (250) et comprenant une interface (220) pouvant fonctionner pour recevoir des données basées sur le jeu depuis un dispositif principal de divertissement (100),
le dispositif secondaire de divertissement pouvant en outre fonctionner pour afficher sur l'écran intégral, sur la base des données basées sur le jeu reçues, une image rendue procurant un point de vue d'un univers de jeu alternatif à celui représenté par une image rendue délivrée en sortie par le dispositif principal de divertissement, le point de vue alternatif étant cohérent avec la position du dispositif secondaire de divertissement par rapport à un écran (150) représentant une image rendue relative à la sortie du dispositif principal de divertissement.

10. Dispositif secondaire de divertissement selon la revendication 9, dans lequel les données basées sur le jeu comprennent une ou plusieurs données sélectionnées dans la liste constituée de :
i. paramètres de position d'objet dans le jeu ;
ii. paramètres de déplacement d'objet dans le jeu ;
iii. paramètres de position de point de vue ;
iv. paramètres d'orientation de point de vue.

11. Dispositif secondaire de divertissement selon l'une quelconque des revendications 9 ou 10, dans lequel le dispositif secondaire de divertissement peut fonctionner pour prédire la position d'objets dans le jeu à partir de données basées sur le jeu préalablement reçues.

12. Dispositif secondaire de divertissement selon la revendication 9, dans lequel les données basées sur le jeu comprennent des images rendues par un dispositif principal de divertissement.

13. Dispositif secondaire de divertissement selon l'une quelconque des revendications 9 à 12, comprenant une logique d'entrée (201, 270) pouvant fonctionner pour spécifier une sélection de point de vue.

14. Dispositif secondaire de divertissement selon l'une quelconque des revendications 9 à 13, comprenant :
une caméra ;
un détecteur de mouvement pour détecter un mouvement inter-image entre des images capturées par la caméra ; et
un générateur de contrôle pour générer une commande de contrôle de jeu dépendant du mouvement d'image détecté.

15. Procédé d'affichage comprenant les étapes suivantes :
établir (s1) une liaison de communication entre un dispositif principal de divertissement et un ou plusieurs dispositifs secondaires de divertissement portables, le dispositif principal de divertissement pouvant fonctionner pour délivrer en sortie une image rendue relative à un premier point de vue d'un univers de jeu sur un écran principal ;
déterminer (s3) un point de vue pour le ou chaque dispositif secondaire de divertissement en plus du point de vue délivré en sortie par le dispositif principal de divertissement, le point de vue étant une réflexion miroir virtuelle de l'univers de jeu cohérente avec la position du dispositif secondaire de divertissement par rapport à l'écran principal ;
transmettre (s3) des données basées sur le jeu permettant l'affichage d'une image rendue relative au point de vue du, ou de chaque, dispositif secondaire de divertissement, et
afficher (s4) la, ou chaque, image rendue sur l'écran du, ou de chaque, dispositif secondaire de divertissement respectif.

16. Programme informatique qui, lorsqu'il est exécuté par un ordinateur, entraîne l'ordinateur à fonctionner comme un dispositif principal de divertissement selon l'une quelconque des revendications 6 à 8.

17. Programme informatique qui, lorsqu'il est exécuté par un dispositif de divertissement portable, entraîne le dispositif de divertissement portable à fonctionner comme un dispositif secondaire de divertissement selon l'une quelconque des revendications 9 à 14.
